**Europäisches Patentamt**

**European Patent Office**

**Office européen des brevets**

(19)

(11) Veröffentlichungsnummer: **0 114 022**
**A1**

(12) # EUROPÄISCHE PATENTANMELDUNG

(21) Anmeldenummer: **83710065.0**

(22) Anmeldetag: **16.09.83**

(51) Int. Cl.³: **F 16 L 25/02**

(30) Priorität: **18.01.83 EP 83100392**

(43) Veröffentlichungstag der Anmeldung: **25.07.84**
Patentblatt 84/30

(84) Benannte Vertragsstaaten: **DE FR GB**

(71) Anmelder: **Walz, Georg, Nibelungenstrasse 16,
D-7920 Heidenheim/Brenz (DE)**

(72) Erfinder: **Walz, Georg, Nibelungenstrasse 16,
D-7920 Heidenheim/Brenz (DE)**

(74) Vertreter: **Patentanwälte Dipl.-Ing. R. Holzer Dipl.-Ing.
(FH) W. Gallo, Philippine-Welser-Strasse 14,
D-8900 Augsburg (DE)**

(54) **Unlösbare, abdichtende Isolierrohrverbindungen mit isolationsüberbrückender Funkenstrecke und Verfahren zur Herstellung einer solchen Isolierrohrverbindung.**

(57) Die Verbindung besteht aus zwei metallenen, sich mit Ringzwischenraum übergreifenden Rohrteilen (1, 2), einem in dem Ringraum angeordneten O-Dichtring (3) aus elektrisch isolierendem, elastisch verformbarem Material und einem ebenfalls in dem Ringraum angeordneten Isolierring (4) aus erhärtbarem Giessharz, welch letzterer von einem, einander gegenüberliegende, längslaufende Oberflächenbereiche der beiden Rohrteile (1, 2) freilassenden und so die Funkenstrecke (5) bildenden Hohlraum durchsetzt ist. Dieser Hohlraum kann durch Bohren oder durch Kerneinlegen vor dem Eingiessen des Isolierringes hergestellt werden und wird durch einen Abschlussstopfen (6) aus durchsichtigem Polyvinylchlorid dicht nach aussen abgeschlossen.

PATENTANWÄLTE
DIPL. ING. R. HOLZER
DIPL. ING. (FH) W. GALLO
PHILIPPINE-WELSER-STRASSE 14
ZUGELASSENE VERTRETER VOR DEM
EUROPÄISCHEN PATENTAMT
PROFESSIONAL REPRESENTATIVES
BEFORE THE EUROPEAN PATENT OFFICE
MANDATAIRES AGRÉÉS PRÈS L'OFFICE
EUROPÉEN DES BREVETS
8900 AUGSBURG
TELEFON 0821/516475
TELEX 532202 PATOL D

- 1 -

Augsburg, den 14. September 1983

Anmelder: Georg Walz, Heiden-
heim/Brenz, Bundesrepublik Deutschland

Anw.Az. : W.1150 Europa

Unlösbare, abdichtende Isolierrohrverbindung
mit isolationsüberbrückender Funkenstrecke
und Verfahren zur Herstellung einer solchen
Isolierrohrverbindung

Die Erfindung betrifft eine unlösbare, abdichtende
Isolierrohrverbindung mit isolationsüberbrückender
Funkenstrecke, die aus zwei metallenen, sich mit Ringzwischenraum übergreifenden Rohrteilen, einem in dem
Ringraum angeordneten Dichtring aus elektrisch
isolierendem, elastisch verformbarem Material und
einem ebenfalls in dem Ringraum angeordneten Isolierring aus hartem Kunststoff besteht, welch letzterer
von einem, einander gegenüberliegende Oberflächenbereiche der beiden Rohrteile freilassenden und so
die Funkenstrecke bildenden Hohlraum durchsetzt ist.

Eine derartige Isolierrohrverbindung ist in der DE-GbmS 73 11 220 beschrieben und in den Fig. 1 und 2 der Zeichnung der genannten Druckschrift dargestellt. Außerdem befinden sich solche Isolierrohrverbindungen im Handel.

Beide Rohrteile der bekannten Isolierrohrverbindung bestehen aus spanlos verformbarem Stahlrohr. Das übergriffene Rohrteil weist an seinem einen Ende einen durch spanlose Warmverformung gebildeten, achssenkrechten Außenflansch auf, der von einem im Querschnitt U-förmigen Dichtring aus elektrisch isolierendem Weichgummi umgriffen wird. An den, dem den Flansch tragenden Rohrteil zugewandten U-Schenkel dieses Dichtringes schließt sich in Achsrichtung ein auf das Rohrteil aufgeschobener Isolierring aus Hartgewebe-Kunststoff an. Der eigentliche Rohrabschnitt des übergreifenden Rohrteils der bekannten Isolierrohrverbindung hat gleiche lichte Weite wie das übergriffene Rohrteil und der übergreifende Rohrabschnitt dieses übergreifenden Rohrteils weist vor der Montage der beiden Rohrteile eine becherartige Erweiterung auf, die von einer achssenkrecht verlaufenden Erweiterungs- stirnwandung und einer sich an deren Außenumfang anschließenden, zum eigentlichen Rohrabschnitt und zum übergriffenen Rohrteil koaxialen, zylindrischen Becherwandung gebildet wird. Wegen der in der Achsebene rechtwinkligen Übergänge zwischen Rohrwandung, Stirnwandung und Becherwandung des übergreifenden Rohrteils muß diese Erweiterung ebenfalls durch spanlose Warmverformung hergestellt werden. Bei der Montage wird diese becherartige Erweiterung des übergreifenden Rohrteils derart über den, den Endflansch des übergriffenen Rohrteils übergreifenden Dichtring geschoben, daß dieselbe das übergriffene Rohrteil mit Ringzwischenraum koaxial übergreift. Sodann wird die Anordnung in einer Vorrichtung einer starken Axialdruckspannung unterworfen, so daß der zwischen der Erweiterungsstirnwand des übergreifenden Rohrteils und dem Endflansch des übergriffenen Rohrteils befindliche U-Schenkel des Dichtrings elastisch abdichtend verformt wird. Anschließend wird unter Aufrechterhaltung dieser Axialspannung die Becherwandung spanlos kalt derart radial nach innen verformt, daß sie sich unter Bildung einer weiteren achssenkrecht verlaufenden Übergangswandung an den anderen U-Schenkel des Dichtrings anlegt, diesen ebenfalls elastisch abdichtend verformt und sich mit ihrem Endteil koaxial zum übergriffenen Rohrteil und dem auf dieses aufgeschobenen Hartgewebe-Isolierring an die Außenumfangsfläche des letzteren anlegt und diesen zwischen sich und dem Außenumfang des übergriffenen Rohrteils bei gleichzeitiger Aufrechterhaltung der den Dichtring elastisch-abdichtend verformenden Axialspannung einklemmt. Der Hartgewebe-Isolierring war schon vor der Montage mit einer Radialbohrung versehen worden, die nunmehr nach der Montage zusammen mit den an sie anschließenden Oberflächenbereichen des übergreifenden und des übergriffenen Rohrteils die Funkenstrecke bildet, über die sich elektrische Überspannungen zwischen den beiden gegeneinander isolierten Rohrteilen ausgleichen können.

Im Erdboden verlegte Rohrleitungen neigen bekanntlich infolge von Lokalelementenbildung zum Aufkommen von Kriechströmen, die ihrerseits wiederum zu örtlichen Elektrolysevorgängen Anlaß geben, durch welche schädliche Korrosionen in der Rohrleitung verursacht werden. Durch den Isolierring werden beide Rohrteile der Isolierrohrverbindung vollständig elektrisch gegeneinander isoliert, so daß dadurch auch solche schädliche Korrosionserscheinungen unterdrückt

- 4 -

werden können. Außerdem kommt es vor, daß bei Baggerarbeiten im Erdreich verlegte Kabel oder/und Rohrleitungen versehentlich beschädigt werden und dadurch Rohrleitungsstränge unter Spannung kommen. Sind solche Rohrleitungen, beispielsweise Gasleitungen, in anliegende Häuser eingeführt, so muß natürlich vermieden werden, daß solche Störspannungen auf das innerhalb des betreffenden Hauses verlegte Rohrleitungsnetz übergreifen können. Auch diesem Zweck dient der Isolierring. Andererseits kann es passieren, daß durch Blitzschlag in das betreffende Haus das im Haus verlegte Rohrleitungsnetz kurzfristig unter die Blitz-Hochspannung kommt, was dann gefährlich werden kann, wenn diese trotz Vorhandenseins einer Hausnetzerdung aus irgendwelchen Gründen nicht zur Erde abfließt. Die Funkenstrecke ermöglicht dann solchen kurzfristigen Hochspannungen, in das außerhalb des Hauses verlegte Rohrleitungsnetz und von diesem zur Erde abzufließen und trägt damit wesentlich zum Blitzschutz des betreffenden Hauses bei. Bei Baggerarbeiten kann es aber auch vorkommen, daß in die Erde verlegte Hochspannungskabel beschädigt werden und die Hochspannung auf daneben verlegte Rohrleitungen übertritt. In diesem Fall verhindert der Isolierring, daß die auf dem außerhalb des Hauses verlegten Rohrstrang stehende Hochspannung auf das Haus-Rohrnetz übertritt. Kommt es aus irgendwelchen Gründen jedoch trotzdem zu größeren Aufladungen, so ermöglicht die Funkenstrecke ein Abfließen dieser Aufladungen zur Erdung des Haus-Rohrnetzes.

Die soeben dargelegten Verhältnisse gelten sinngemäß auch für überirdisch verlegte Öl-Fernleitungen.

Aus den soeben dargelegten Gründen ist in der Bundesrepublik Deutschland und in einigen anderen Staaten für Gasleitungs-Hauseinführungen der Einbau einer Isolierrohrverbindung mit Funkenstrecke der eingangs dargelegten allgemeinen Bauart vorgeschrieben. Für die Bundesrepublik Deutschland besteht außerdem eine Prüfvorschrift für solche Isolierrohrverbindungen, die durch die DIN-Norm 3389 festgelegt ist. Die Prüfung der Isolierrohrverbindungen erfolgt mittels eines stationären, hochspannungerzeugenden Prüfgeräts, welches Funkenüberschläge im Prüfling durch Sichtanzeige eines Stromanstieges und eines Spannungsabfalles und außerdem durch ein akustisches Signal anzeigt. Die am Prüfgerät einstellbare Prüfspannung beträgt im allgemeinen 2500 V, kann jedoch je nach Verwendungszweck der betreffenden Isolierrohrverbindung verschieden hoch sein.

Obwohl der Hartgewebe-Isolierring der bekannten Isolierrohrverbindungen mit Funkenstrecke der Prüfung und kurzfristigen Hochspannungsbelastungen durchaus standhält, kommt es bei längeren Hochspannungsbelastungen der Funkenstrecke zu Verschmorungen und Verkokungen an den Wandungen der die Funkenstrecke begrenzenden Radialbohrung des Isolierringes, so daß dieser seine Isolierfähigkeit verliert. Da Hartgewebe-Kunststoff bekanntlich undurchsichtig ist, bleiben länger andauernde Lichtbogenbildungen in der Funkenstrecke der im Rohrleitungsnetz eingebauten Isolierrohrverbindung unbemerkt. Dies stellt einen Nachteil insofern dar, als einmal eine Gefährdung des Rohrleitungsnetzes eintritt und zum anderen die bekannten Isolierrohrverbindungen in eingebautem Zustand nicht mehr auf ihre Isoliereigenschaften überprüft werden können. Die Folge ist, daß sich immer eine gewisse Anzahl von nichtfunktionsfähigen Isolier-

- 6 -

rohrverbindungen im Rohrleitungsnetz befindet, was nur dann bemerkt werden kann, wenn zufällig aus anderen Gründen die Isolierrohrverbindung ausgebaut werden muß. Aber auch dann ist die Verkohlung der Funkenstrecke von außen her nicht zu erkennen, es sei denn, die Isolierrohrverbindung wird einer neuerlichen Untersuchung im stationären Prüfgerät unterzogen.

Durch die Erfindung soll infolgedessen die Aufgabe gelöst werden, solche Isolierrohrverbindungen mit isolationsüberbrückender Funkenstrecke so zu gestalten, daß einerseits innere Verschmorungen und Verkokungen der Funkenstrecke vermieden werden und andererseits länger andauernde Lichtbogenübertritte in der eingebauten Funkenstrecke von außen sichtbar sind. Daneben wird durch die Erfindung angestrebt, das Herstellungsverfahren solcher Isolierrohrstücke mit isolationsüberbrückender Funkenstrecke so zu vereinfachen, daß die Herstellung solcher Isolierrohrverbindungen sich kostenmäßig gegenüber den bekannten Konstruktionen wesentlich verbilligt, ohne daß die Qualität der Isolierrohrverbindung leidet.

Diese Aufgabe wird, ausgehend von einer Isolierrohrverbindung der eingangs dargelegten allgemeinen Bauart, durch die Kombination folgender, teils bekannter, teils neuer Merkmale gelöst:

a) Am Außenumfang des dem Ringraumgrund benachbarten Endes des übergriffenen Rohrteils ist eine Ringnut gebildet,

b) der Dichtring ist ein in diese Ringnut eingelegter O-Ring von in unverformtem Zustand

0114022

- 7 -

größerer Ringstärke als der radialen Weite des Ringraumes plus Nuttiefe, der elastisch verformt mit seinem Außenumfang an der glatten Innenfläche des übergreifenden Rohrteils anliegt,

c) der Isolierring besteht aus einem den Ringraum über seine ganze axiale Länge zwischen dem O-Ring und seiner stirnseitigen Mündung satt ausfüllenden, erhärteten Gießharz, und

d) der die Funkenstrecke bildende Hohlraum erstreckt sich axial außerhalb des Bereiches des Dichtringes derart achsparallel in Längsrichtung des Isolierringes, daß ein Längsstreifen der Außenfläche des übergriffenen Rohrteils und ein diesem radial gegenüberliegender Längsstreifen der Innenfläche des übergreifenden Rohrteils freibleibt und daß der Hohlraum an beiden Enden durch Isoliermasse abgeschlossen ist, wobei zumindestens die ihn zur stirnseitigen Ringraummündung hin abschließende Isoliermasse durchsichtig oder durchscheinend ist.

Gegenüber Isolierrohrverbindungen der oben im einzelnen gewürdigten bekannten Bauart bringt die erfindungsgemäße Isolierrohrverbindung den technischen Fortschritt, daß Verschmorungen bzw. Verkokungen an den Begrenzungswandungen des die Funkenstrecke bildenden Hohlraums ausgeschlossen sind, daß ferner Funkenüberschläge an der Funkenstrecke von außen sichtbar sind, und daß außerdem die Herstellung der Isolierrohrverbindung gegenüber den bekannten Isolierrohrverbindungen wesentlich vereinfacht und dadurch auch verbilligt ist.

- 8 -

Die beiden metallenen Rohrteile der erfindungsgemäßen Isolierrohrverbindung können aus jedem beliebigen, für die Herstellung der betreffenden Rohrleitung zugelassenen Metall bestehen und wahlweise jeweils entweder gegossen, nahtlos gezogen oder stranggepreßt sein.

Der O-Ring besteht vorzugsweise aus weichem Naturkautschuk, weichem Butadien-Acrylnitril-Polymerisat oder weichem Silikonkautschuk.

Der Isolierring ist vorzugsweise aus einem Phenol-, Epoxid-oder Polyesterharz gefertigt, vorzugsweise aus einem unmodifizierten Epoxidhard auf der Basis von Disphenol A, dem als Härter ein solcher auf Polyaminoimidazolinbasis beigemischt ist.

Die Radialabmessung des die Funkenstrecke bildenden Hohlraumes kann gleich oder etwas größer als die Radialabmessung des zwischen den beiden sich übergreifenden Rohrteilen befindlichen Ringraumes sein, in welchem Fall der Isolierring an der stirnseitigen Ringraummündung axial über das Stirnende des übergreifenden Rohrteils übersteht, wodurch vermieden wird, daß Funkenentladungen an der Stirnseite dieses Ringraumes stattfinden.

Der die Funkenstrecke bildende Hohlraum kann im achssenkrechten Querschnitt der Isolierrohrverbindung entweder kreisförmig sein oder aber auch die Form eines Kreisringsektors haben, je nachdem, auf welche Weise die Isolierrohrverbindung hergestellt wird.

- 9 -

Gemäß einer bevorzugten Ausführungsform der erfindungsgemäßen Isolierrohrverbindung ist der Funkenstrecken-Hohlraum zur stirnseitigen Ringraummündung hin durch einen Abschlußstopfen aus durchsichtigem bzw. durchscheinendem, elastischem Polyvinylchlorid abgeschlossen, der diese Mündung elastisch verformt dichtend abschließt und der bei im Querschnitt vorzugsweise kreisförmiger Gestaltung des Funkenstreckenhohlraums vorteilhaft aus einem Abschnitt eines PVC-Schweißdrahtes besteht.

Das übergreifende Rohrteil ist vorteilhaft in dem das übergriffene Rohrteil übergreifenden Bereich in beispielsweise aus Fig. 3 der DE-GbmS 7 311 220 an sich bekannter Weise becherartig erweitert.

Bei den bekannten Isolierrohrverbindungen mit isolationsüberbrückender Funkenstrecke und auch bei der soeben dargelegten erfindungsgemäßen Isolierrohrverbindung ist die Länge der Funkenstrecke von der Radialabmessung des Isolierringes abhängig. Dies bedeutet, daß bei den bekannten Isolierrohrverbindungen die Ringstärke des Isolierringes die Weite der Funkenstrecke bestimmt, während bei der erfindungsgemäßen Isolierrohrverbindung die Radialabmessung des Ringraums zwischen dem übergreifenden Rohrteil und dem übergriffenen Rohrteil die Funkenstreckenweite festlegt. Wie oben bereits kurz erwähnt, kann es jedoch wünschenswert sein, die Weite der Funkenstrecke je nach Verwendungsgebiet der Isolierrohrverbindung verschieden zu bemessen.

- 10 -

Diese Möglichkeit bietet eine Weiterbildung der erfindungsgemäßen Isolierrohrkupplung, bei welcher das übergreifende Rohrteil in an sich bekannter Weise aus spanlos verformbarem Metall besteht und die dadurch gekennzeichnet ist, daß der das übergriffene Rohrteil übergreifende Bereich des übergreifenden Rohrteils axial außerhalb des Dichtringbereiches mit mindestens zwei ebenen diametralen, zueinander parallelen und achsparallelen, radial weiter innen als der übrige Umfangsbereich des übergreifenden Rohrteils gelegenen, mit ihren Außenflächen Ansatzstellen für einen Maulschlüssel bildenden Wandungsbereichen versehen ist und daß der die Funkenstrecke bildende Hohlraum sich in dem Zwickelbereich zwischen der Innenfläche eines dieser beiden Wandungsbereiche und dem diesem gegenüberliegenden Außenflächenbereich des übergriffenen Rohrteils befindet.

Mit Rücksciht auf eine einfache Fertigung erstrecken sich die, die Ansatzstellen für einen Maulschlüssel bildenden Wandungsbereiche des übergreifenden Rohrteils vorzugsweise axial bis an das im Bereich des übergriffenen Rohrteils gelegene Stirnende des übergreifenden Rohrteils.

Die erfindungsgemäße achsparallele Anordnung des Funkenstreckenhohlraums in dem erwähnten Zwickelbereich gibt die Möglichkeit, die Weite der Funkenstrecke zwischen dem Maß des Radialabstandes zwischen der Innenfläche des übergreifenden Rohrteils und der normalen gerundeten Außenfläche des übergriffenen Rohrteils als Größtmaß und dem kleinsten Maß zwischen der Innenfläche des übergreifenden Rohrteils und dem Übergang der gerundeten Außenfläche des übergriffenen

- 11 -

Rohrteils zu einer der beiden Abflachungen dieser Außenfläche als Mindestmaß zu variieren. Die Weite der Funkenstrecke hängt also in diesem Falle nur davon ab, an welche Stelle dieses Zwickelbereiches der die Funkenstrecke bildende Hohlraum gelegt wird.

Eine vorteilhafte Weiterbildung der erfindungsgemäßen Isolierrohrverbindung ist dadurch gekennzeichnet, daß das übergreifende Rohrteil ein Teil eines Kugelhahngehäuses ist und daß der O-Dichtring einen rundumlaufenden, lippenförmigen Ansatz hat, der im Querschnitt U-förmig ausgebildet ist, wobei der eine U-Schenkel am O-Ring ansetzt, ferner der U-Steg zwischen dem Kugelküken und der kegelig eingesenkten kükenseitigen Stirnfläche des übergriffenen Rohrteils verläuft und mit geringem Druck an den ihm zugewandten Oberflächenbereichen dieser beiden Teile abdichtend anliegt, und wobei der andere U-Schenkel an der Innenfläche des übergriffenen Rohrteils anliegend ein Stück in das Innere dieses Rohrteils hineinragt. Eine solche Anwendung der grundsätzlichen erfindungsgemäßen Bauart einer Isolierrohrverbindung ergibt nicht nur eine raumsparende, kompakte, in sich geschlossene Konstruktion eines insbesondere für Gasleitungs-Hauseinführungen bestimmten Kugelhahnes, sondern außerdem auch eine sehr arbeitssparende, einfache Herstellung eines solchen Kugelhahns, die sich insbesondere preislich vorteilhaft auswirkt.

Während es aus der CH-PS 422 445 ganz allgemein bekannt ist, zur Überbrückung der Stoßstelle stumpf aneinanderstoßender Rohre eine Hülse über die Stoßstelle zu setzen, deren Innendurchmesser größer als der Außendurchmesser der miteinander zu verbindenden Rohre ist und die an einem Hülsenende eine innere Ringnut aufweist, in die ein elastischer Dichtungsring eingelegt ist, der an der Außenfläche eines der beiden miteinander zu verbindenden Rohre dichtend anliegt, wonach zur Fixierung der Verbindung der sich an den Dichtungsring anschließende Ringraum zwischen der Hülse und den beiden stumpf aneinanderstoßenden Rohren mit einem Gemisch aus Epoxidharz und einem geeigneten Härter ausgegossen wird, ist aus der DE-OS 27 13 398 eine unlösbare, abdichtende Isolierrohrverbindung bekannt, die aus zwei metallenen, sich mit Ringraum übergreifenden Rohrteilen besteht, wobei der das übergriffene Rohrteil übergreifende Bereich des übergreifenden Rohrteils die Form einer becherartigen Erweiterung hat, die über einen kegelig ausgebildeten Zwischenbereich in das eigentliche Rohrstück des übergreifenden Rohrteils übergeht. Das diesem kegeligen Erweiterungsberech des übergreifenden Rohrteils zugewandte Ende des übergriffenen Rohrteils ist bei dieser bekannten Anordnung außendurchmessermäßig im Querschnitt lippenartig verengt und auf die Umfangsfläche dieser lippenartigen Verengung ist ein O-Dichtring aus Neopren aufgeschoben, der elastisch verformt dichtend an der glatten Innenfläche der becherartigen Erweiterung des übergreifenden Rohrteils und an der glatten Umfangsfläche der lippenartigen Verengung des übergriffenen Rohrteils anliegt. An den Lippenbereich des übergriffenen Rohrteils schließt sich in Achsrichtung vom Lippenende weg ein glatter Außenflächenumfangsbereich des übergriffenen Rohrteils und diesem mit Radialabstand gegenüberliegend ein Innenumfangsflächenbereich der becherartigen Erweiterung des übergreifenden Rohrteils an. An letzteren schließt sich in gleicher Achsrichtung ein bis zum stirnseitigen Mündungsende der becherartigen Erweiterung reichender, mit Innenumfangsrillen versehener Bereich an, welchem mit Radialabstand ein gleichermaßen gerillter Außenumfangsflächenbereich des übergriffenen Rohrteils gegenübersteht. Sowohl der vom O-Dichtring bis zum Mündungs-Stirnende der becherartigen Erweiterung des übergreifenden Rohrteils reichende Ringraum als auch der sich an den O-Ring zum kegelartigen Erweiterungsbereich dieser becherartigen Erweiterung anschließende Innenumfangsbereich dieser Erweiterung sind jeweils mit einem Gemisch aus Epoxidharz und einem geeigneten Härter ausgegossen.

Abgesehen davon, daß es sich bei dieser bekannten Isolierrohrverbindung um eine solche ohne isolationsüberbrückende Funkenstrecke handelt, hat dieselbe hinsichtlich ihrer Gesamtkonstruktion so wenige Gemeinsamkeiten mit der erfindungsgemäßen Isolierrohrverbindung und dadurch bedingt so viele, noch weiter unten darzulegende herstellungsmäßige Nachteile, daß dieselbe mit dem Erfindungsgegenstand nicht vergleichbar ist.

Wie aus obigen Darlegungen außerdem hervorgeht, ist die zusammengefaßte, aus der DE-GbmS 73 11 220, der CH-PS 422 445 und der DE-OS 27 13 398 zu ziehende technische Lehre weder geeignet, dem Fachmann die durch den Gegenstand der vorliegenden Erfindung zu lösende Aufgabe, noch deren erfindungsgemäße Lösung nahezulegen.

- 14 -

Ein zur Herstellung einer erfindungsgemäßen Isolierrohrverbindung der oben zuerst dargelegten Ausführungsart dienendes Verfahren ist gemäß der Erfindung durch folgende Verfahrensschritte gekennzeichnet:

Wahlweise a) oder b): Versehen des Außenumfangs des dem Ringraumgrund zugeordneten Endes des übergriffenen Rohrteils mit einer Ringnut,

Wahlweise b) oder a): Gegebenenfalls Glätten des dem Ringraumgrund zugeordneten Bereiches der Innenfläche des übergreifenden Rohrteils,

c) Einlegen des O-Dichtungsringes in die Ringnut des übergriffenen Rohrteils,

d) Einschieben des übergriffenen Rohrteils in das übergreifende Rohrteil,

e) Verbringen der Anordnung in vertikale, mit der Ringraummündung nach oben weisende Stellung und Überprüfen der Koaxialität der beiden Rohrteile,

f) Gegebenenfalls Aufsetzen eines ringförmigen Formaufsatzes auf die Mündungs-Stirnseite des übergreifenden Rohrteils,

g) Einbringen eines Gemisches aus einem elektrisch isolierenden Gießharz und einem elektrisch isolierenden Härter in den Ringraum zwischen dem übergreifenden Rohrteil und gegebenenfalls dem Formaufsatz einerseits und dem übergriffenen Rohrteil andererseits,

h) Erhärtenlassen der Füllung, danach gegebenenfalls Abnehmen des Formaufsatzes,

i) Bohren bzw. Fräsen einer achsparallelen Bohrung in die erhärtete Füllung von der Mündungs-Stirnseite her über einen Teil der axialen Ringraumlänge mit etwas größerem Durchmesser als der radialen Ringraumweite derart, daß von beiden Rohrteilen Material abgetragen wird,

k) Dichtes Verschließen eines der Ringraummündung zugeordneten Teils der Bohrung mit einem Abschlußstopfen aus durchsichtigem bzw. durchscheinendem, elastischem Isolierstoff, der vorzugsweise von einem PVC-Schweißdraht abgeschnitten wurde.

Dieses erfindungsgemäße Verfahren unterscheidet sich also grundlegend von dem oben dargelegten Verfahren zur Herstellung der bekannten Isolierrohrverbindung mit isolationsüberbrückender Funkenstrecke gemäß DE-GbmS 73 11 220 und ist, wie auf den ersten Blick erkennbar, wesentlich einfacher, damit arbeitssparender und folglich wesentlich billiger. Besonders vorteilhaft ist bei dem erfindungsgemäßen Verfahren der Umstand, daß bei der Vorbereitung der beiden Rohrteile vor der Montage auf Schweißvorgänge verzichtet werden kann und daß es genügt, sofern das übergreifende Rohrteil überhaupt eine becherartige Erweiterung aufweisen soll, diese unter Verwendung eines nahtlos gezogenen oder stranggepreßten Rohrteiles durch spanlose Kaltverformung herzustellen. Ist das übergreifende Rohrteil ein Gußkörper, so ergibt sich, falls eine becherartige Erweiterung desselben vorgesehen sein soll, diese bereits von der Gießform her.

Auch gegenüber dem in der DE-OS 27 13 398 beschriebenen Verfahren zur Herstellung der oben bereits erörterten, in der gleichen Druckschrift dargelegten funkenstreckenlosen Isolierrohrverbindung weist das erfindungsgemäße Verfahren eine ganze Reihe von Vorteilen auf. So kann beispielsweise bei dem bekannten Verfahren der O-Dichtungsring nicht einfach auf die stirnseitige lippenartige Verengung des Außendurchmessers des übergriffenen Rohrteils aufgeschoben und dieses dann zusammen mit dem O-Ring in das übergreifende Rohrteil eingeschoben werden, da der O-Ring dann durch die Innenflächenriffelung des übergreifenden Rohrteils schon beschädigt würde, bevor er den glatten Anlagebereich der Innenfläche des übergreifenden Rohrteils erreicht. Vielmehr muß bei der bekannten Anordnung der O-Ring schon vor dem Ineinanderstecken der beiden Rohrteile in das übergreifende Rohrteil eingesetzt werden, wo er zunächst auf dem kegeligen Erweiterungsbereich der becherartigen Erweiterung des übergreifenden Rohrteils liegenbleibt. Anschließend wird das übergriffene Rohrteil in das übergreifende Rohrteil eingeschoben und der O-Ring mittels eines in das übergriffene Rohrteil eingeführten Werkzeugs erfaßt und durch Zurückbewegen dieses Werkzeugs relativ zum übergriffenen Rohrteil auf dessen stirnseitige Lippenverengung aufgeschoben, so daß er nunmehr unter elastischer Verformung dichtend an der Umfangsfläche dieser Verengung und an der gegenüberliegenden glatten Innenfläche des übergreifenden Rohrteils anliegt. Es versteht sich für jeden Fachmann von selbst, daß ein derartiges Werkzeug relativ kompliziert ausgebildet sein muß, denn es muß sich
einerseits durch die lichte Weite des übergriffenen
Rohrteils bis zum Ringraumgrund einführen lassen,
andererseits ausspreizbare Greifer aufweisen, mittels
welchen der O-Ring von hinten erfaßt und auf die
stirnseitige Lippenverengung des übergriffenen Rohrteils aufgeschoben und somit in Dichtstellung gebracht
werden kann und diese Greifer müssen sodann wieder so
weit in das Werkzeug hinein zurückziehbar sein, daß
das Werkzeug ohne Beschädigung wieder aus dem übergriffenen Rohrteil herausgezogen werden kann. Daß
außerdem auch Vorrichtungen Anwendung finden müssen,
mit deren Hilfe die beiden Rohrteile für den Vorgang
des Instellungbringens des O-Ringes sowohl in axialer
als auch in koaxialer Hinsicht genau aufeinander
ausgerichtet gehalten werden, versteht sich für den
Fachmann von selbst. Während das Eingießen des Gießharzes in den zwischen dem O-Ring und der stirnseitigen
Ausmündung des Ringraumes gelegenen Ringraumbereich
verhältnismäßig geringe Schwierigkeiten machen dürfte,
ist für das Einbringen des Gießharzes in den Umfangsbereich zwischen der kegeligen Erweiterung des übergreifenden Rohrteils und der Stirnkante der lippenartigen Verengung des übergriffenen Rohrteils wiederum
eine recht komplizierte Vorrichtung erforderlich, da
dann vermieden werden muß, daß die durch den eigentlichen Rohrabschnitt des übergreifenden Rohrteils
hindurch einzubringende Gießmasse unbeabsichtigt in
das Innere des übergriffenen Rohrteils gelangt, und
andererseits sichergestellt werden muß, daß dieselbe den auszufüllenden Ringraum vom O-Dichtring
bis hin zum Übergang der kegeligen Erweiterung des
übergreifenden Rohrteils zu dessen normaler lichter
Weite satt ausfüllt.

Bei dem oben dargelegten erfindungsgemäßen Verfahren zur Herstellung einer Isolierrohrverbindung mit isolationsüberbrückender Funkenstrecke geschieht das Versehen des übergriffenen Rohrteils mit einer Ringnut gemäß Merkmal a) bzw. b) zweckmäßig durch Drehen oder Schleifen, um eine gut dichtende Anlage des O-Dichtringes innerhalb der Nut sicherzustellen. Ist das übergreifende Rohrteil ein Gußkörper, so erfolgt das Glätten des dem Ringraumgrund zugeordneten Bereiches der Innenfläche desselben gemäß Verfahrensschritt b) bzw. a) zweckmäßig durch Ausdrehen oder Ausschleifen, handelt es sich jedoch bei dem übergreifenden Rohrteil um ein nahtlos gezogenes Rohr oder ein stranggepreßtes Rohr, so kann der Verfahrensschritt des Glättens entfallen. Das Überprüfen der Koaxialität der beiden Rohrteile gemäß Verfahrensschritt e) kann mittels einer einfachen, der Fachwelt allgemein bekannten und deshalb hier nicht näher zu beschreibenden Lehre erfolgen. Das Bohren bzw. Fräsen einer achsparallelen Bohrung gemäß Verfahrensschritt i) erfolgt zweckmäßig unter Zuhilfenahme einer geeigneten Vorrichtung bzw. Bohrlehre. Da auch derartige Vorrichtungen der Fachwelt allgemein bekannt sind, kann hier auf eine Beschreibung derselben verzichtet werden.

Das ganze erfindungsgemäße Verfahren ist in seinem Aufbau derart einfach, daß es ohne große Schwierigkeit mit Hilfe eines oder mehrerer, heute allgemein üblicher Fertigungsautomaten oder Industrieroboter ausgeführt werden kann und dadurch die Fertigung außerordentlich verbilligt wird.

Die Herstellung der oben an zweiter Stelle dargelegten bevorzugten Ausführungsform der erfindungsgemäßen Isolierrohrverbindung mit isolationsüberbrückender Funkenstrecke erfolgt erfindungsgemäß vorzugsweise durch die nachstehend beschriebenen Verfahrensschritte:

Wahlweise a) oder b): Versehen des Außenumfangs
des dem Ringraumgrund zugeordneten Endes des übergriffenen Rohrteils mit einer Ringnut,

aa) Einbringung eines nahtlos gezogenen bzw. stranggepreßten Metallrohres, dessen Durchmesser zwischen
dem Durchmesser des eigentlichen Rohrabschnitts des
übergreifenden Rohrteils und demjenigen der becherartigen Erweiterung desselben liegt, in eine vorteilhaft stufenweise arbeitende Verformungs- und
Montagevorrichtung, in welcher das übergreifende
Rohrteil durch axiale Relativbewegung zwischen
Aufweit- oder Formgebungsdornen bzw. Ziehringen
verformt und in welcher es mit dem übergriffenen
Rohrteil vormontiert wird,

ab) Herstellen der becherartigen Erweiterung des
übergreifenden Rohrteils durch gegebenenfalls
zweistufiges radiales Aufweiten eines etwa die
halbe axiale Länge des Metallrohres einnehmenden
Abschnittes des Metallrohres mittels Aufweitdorn
auf den Fertigdurchmesser dieser becherartigen
Erweiterung,

ac) Herstellen des eigentlichen Rohrabschnitts
des übergreifenden Rohrteils durch gegebenenfalls
zweistufiges radiales Einziehen des nicht
erweiterten Abschnitts des Metallrohres mittels
Ziehring auf den Fertigdurchmesser dieses Rohrabschnitts,

ad) Zurückziehen des Aufweitdornes aus der becherartigen Erweiterung des übergreifenden Rohrteils,.

Wahlweise b) oder c): Einlegen des O-Dichtungsringes in die Ringnut des übergriffenen Rohrteils,

d) Einschieben des übergriffenen Rohrteils in das
übergreifende Rohrteil,

da) Einführen eines, zwei ebene, radial außen
diametral gegenüberliegend achsparallel angeordnete,
parallele Abflachungen aufweisenden, im übrigen dem
Querschnitt des Ringraumes zwischen der becherartigen Erweiterung des übergreifenden Rohrteils
und dem übergriffenen Rohrteil angepaßten Widerlager-Ringmuffenwerkzeugs in diesen Ringraum,

db) Einführen der so gebildeten Anordnung in einen
Ziehring der Verformungs- und Vormontagevorrichtung,
dessen lichte Weite gleich dem Außendurchmesser der
becherartigen Erweiterung des übergreifenden Rohrteils ist und der innen zwei diametrale, zueinander
parallele, zu den Abflachungen des Widerlager-Ringmuffenwerkzeugs affine Abflachungen aufweist, deren
gegenseitiger Abstand um die doppelte Wandstärke
der becherartigen Erweiterung des übergreifenden
Rohrteils größer ist als der gegenseitige Abstand
der Widerlager-Ringmuffenwerkzeug-Abflachungen,
derart, daß die Abflachungen dieses Werkzeugs und
diejenigen des Ziehringes einander gegenüberliegen,
und dadurch Erzeugen der bis zum Mündungsrand der
becherartigen Erweiterung des übergreifenden Rohrteils reichenden Maulschlüsselansatzstellen an
dieser Erweiterung,

dc) Herausnehmen der Anordnung aus der Verformungs- und Vormontagevorrichtung und Herausziehen des Widerlager-Ringmuffenwerkzeugs aus dem Ringraum zwischen der becherartigen Erweiterung des übergreifenden Rohrteils und dem übergriffenen Rohrteil,

e) Verbringen der Anordnung in vertikale, mit der Ringraummündung nach oben weisende Stellung und Überprüfen der Koaxialität der beiden Rohrteile,

f') Einbringen eines Gemisches aus einem elektrisch isolierenden Gießharz und einem elektrisch isolierenden Härter in den Ringraum,

g') Erhärtenlassen der Füllung,

h') Haltern der Anordnung derart, daß ein achsparalleles Bohren bzw. Fräsen von der stirnseitigen Ringraummündung her in den nunmehr von der erhärteten, den Isolierring bildenden Gießmasse ausgefüllten Ringraum hinein in einem radial zwischen einem der beiden verformten Umfangsbereiche des übergreifenden Rohrteils und dem diesem gegenüberliegenden Umfangsbereich des übergriffenen Rohrteils gelegenen Ringraum-Zwickelbereich so erfolgt, daß von beiden Rohrteilen Material abgetragen werden kann,

i) Bohren bzw. Fräsen einer achsparallelen Bohrung in die erhärtete Gießmasse von der Mündungs-Stirnseite her über einen Teil der axialen Ringraumlänge mit etwas größerem Durchmesser als dem Abstandsmaß zwischen dem betreffenden verformten

Umfangsbereich des übergreifenden Rohrteils und dem diesem gegenüberliegenden Umfangsbereich des übergriffenen Rohrteils entspricht, und

k) Dichtes Verschließen eines der Ringraummündung zugeordneten Teils der Bohrung mit einem Abschlußstopfen aus durchsichtigem bzw. durchscheinendem, elastischem Isolierstoff, der von einem PVC-Schweißdraht abgeschnitten wurde.

Die Gestaltung der zur Ausführung dieser Verfahrensschritte erforderlichen Werkzeuge, Lehren und Vorrichtungen ergibt sich dem Fachmann ohne weiteres aus der soeben gegebenen Beschreibung der Verfahrensschritte, so daß auf eine Darstellung bzw. detaillierte Beschreibung dieser Werkzeuge, Lehren und Vorrichtungen, hinsichtlich deren Gestaltung der Werkzeugmacher im übrigen ohnehin weitgehende Freiheit hat, verzichtet werden kann. Die Vorteile der auf diese Weise hergestellten, weitergebildeten Ausführungsform der erfindungsgemäßen Isolierrohrverbindung sind im wesentlichen die gleichen, die bereits oben in Verbindung mit der erstbeschriebenen Verfahrensweise erzielbar sind.

Das soeben beschriebene Verfahren ist in der Weise abwandelbar, daß die für die Verfahrensschritte aa) bis ad) und c) bis dc) verwendete Verformung und Vormontagevorrichtung anstatt eines Ziehringes eine Doppelbackenpresse mit radial verschiebbaren, diametral einander gegenüberliegend angeordneten, ebenen, zueinander parallelen und achsparallelen Preßbacken aufweist, die den Abflachungen des Widerlager-Ringmuffenwerkzeugs gegenüberstehen, und daß die Vorrichtung

- 23 -

außerdem umfangsmäßig zwischen diesen Preßbacken gelegene, feststehende, hohlzylindersegmentförmige Widerlagerflächen aufweist, deren Durchmesser im wesentlichen gleich dem Außendurchmesser der becherartigen Erweiterung des übergreifenden Rohrteils ist, und daß im Verfahrensschritt db) die Maulschlüsselansatzstellen dieser becherartigen Erweiterung durch radiales Nachinnenbewegen der Preßbacken der Backenpresse erzeugt werden, wobei sich die Außenumfänge der nicht verformten Bereiche der becherartigen Erweiterung an diese hohlzylindersegmentförmigen Widerlagerflächen und die Innenumfänge der verformten Bereiche an die Abflachungen des Widerlager-Ringmuffenwerkzeugs anlegen, worauf die Preßbacken anschließend vor dem Herausziehen des Widerlager-Ringmuffenwerkzeugs wieder in ihre Ausgangslage zurückbewegt werden.

Diese abgewandelte Verfahrensweise ist dann anzuwenden, wenn sich die Maulschlüsselansatzstellen der becherartigen Erweiterung des übergreifenden Rohrteils nicht bis zur Mündungskante der Erweiterung hin erstrecken sollen, sondern deren Mündungsquerschnitt kreisringförmig bleiben soll.

Der die Funkenstrecke bildende achsparallele Hohlraum der erfindungsgemäßen Isolierrohrverbindung kann in Abwandlung des erfindungsgemäßen Verfahrens anstatt durch Bohren bzw. Fräsen auch durch achsparalleles Einbringen eines stabartigen und formmäßig dem Querschnitt des herzustellenden Hohlraums und dem betreffenden Ringraumbereich angepaßten, sich elastisch an die freizuhaltenden Bereiche der den Ringraum begrenzenden Oberflächen der beiden Rohrteile anschmiegenden Kernes in den Ringraumbereich vor dem Einbringen des Gießharz-Härtergemisches und Wiederentfernen des Kernes
nach zumindestens teilweisem Erhärten der Füllung hergestellt werden, wonach die Ringraummündung nach Entfernung des Kernes mit einem Stopfen aus elastischem,
durchsichtigem oder durchscheinendem Polyvinylchlorid
dichtend verschlossen wird, dessen Querschnitt affin
zu dem Hohlraumquerschnitt ist. Der zur Herstellung
des achsparallelen Hohlraums benötigte Kern kann ein
wiederverwendbarer, beispielsweise also aus Metall hergestellter und vor Einlegen an seinen vorgesehenen
Berührungsstellen mit den Rohrteilwandungen und der
einzubringenden Füllung gefetteter Kern sein, es
kann sich aber auch um einen nur begrenzt wiederverwendbaren Kern, beispielsweise aus Holz oder Hartgummi handeln oder aber es kann sich um einen verlorenen Kern handeln, beispielsweise aus Gips oder
einer anderen leicht zerstörbaren und aus dem Ringraum
entfernbaren Masse.

In Anwendung auf die Herstellung eines Kugelhahnes
mit Isoliertrennstelle und isolationsüberbrückender
Funkenstrecke ist das erfindungsgemäße Verfahren derart abgewandelt, daß das übergriffene Rohrteil so weit
in das übergreifende Rohrteil eingeschoben wird, daß
der U-Schenkel des O-Dichtrings am Kugelküken anliegt,
daß anschließend das übergriffene Rohrteil mit leichtem
Axialdruck derart in Richtung des Kugelkükens gedrängt
wird, daß der an ihm anliegende U-Schenkel der O-Ringlippe elastisch verformt wird und dichtend sowohl am
Kugelküken als auch an der kegelig abgesenkten Stirnfläche des übergriffenen Rohrteils anliegt, wonach der
Axialdruck während und nach dem Einbringen des Gießharzes in den Ringraum so lange aufrechterhalten wird,
bis die Gießharzfüllung erhärtet ist.

Will man eine besonders große Axial- und
Torsionsfestigkeit der erfindungsgemäßen Isolierrohrverbindung mit isolationsüberbrückender Funkenstrecke erhalten, so kann vor der Montage eines der
beiden Rohrteile in seinem Übergreifungsbereich mit
dem jeweils anderen Rohrteil mit diesem zugewandten
Längs- oder/und Quernuten versehen werden, was bei
Gußteilen schon von der Form her und bei nahtlos
gezogenen bzw. stranggepreßten Rohrteilen durch entsprechende Bearbeitung geschehen kann.

Einige Ausführungsformen der erfindungsgemäßen
Isolierrohrverbindung mit isolationsüberbrückender
Funkenstrecke werden nunmehr unter Bezug auf die
anliegenden Zeichnungen in ihren Einzelheiten nachstehend beispielsweise beschrieben, in welchen:

Fig. 1   einen schematischen Axial-Halbschnitt durch eine Ausführungsform einer erfindungsgemäßen
Isolierrohrverbindung zeigt,

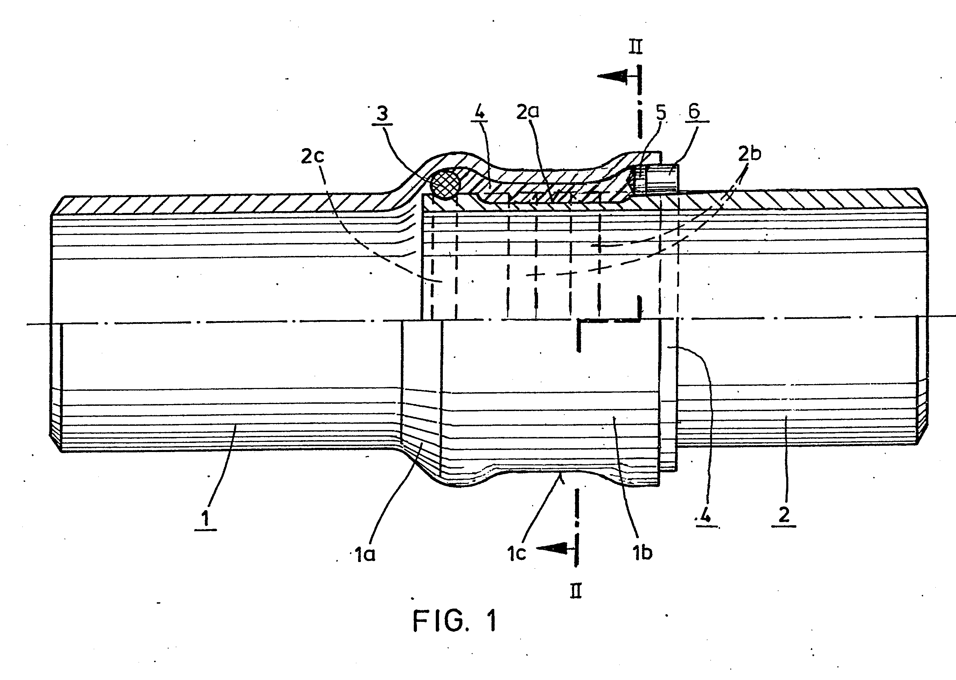

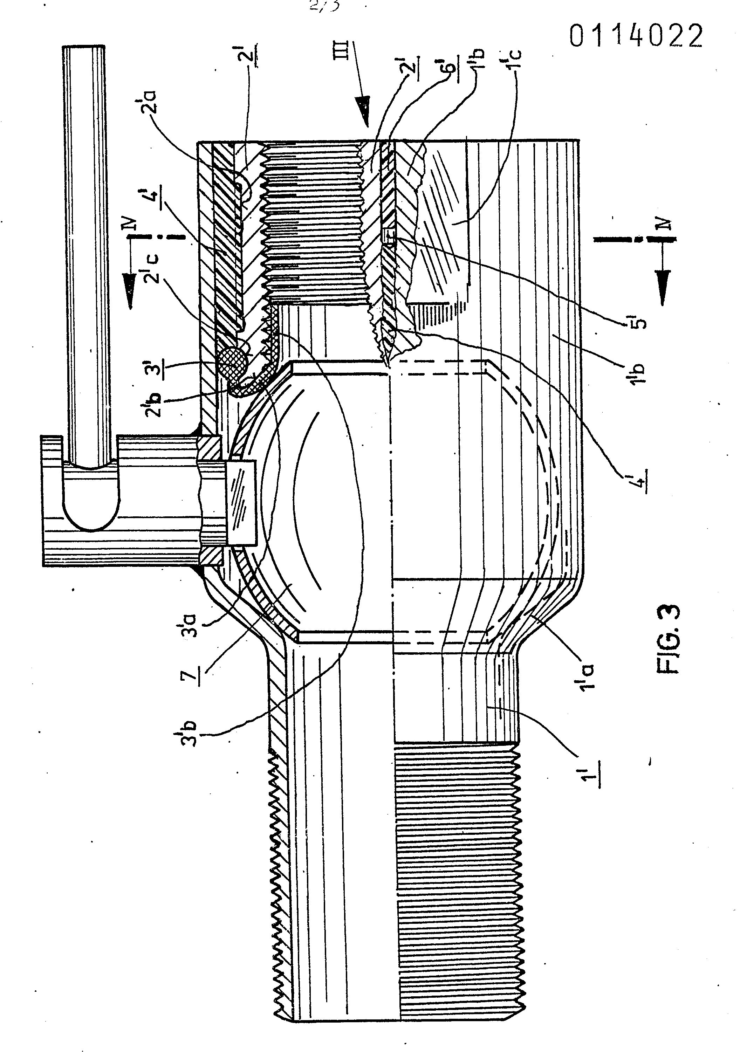

Fig. 2   einen schematischen Querschnitt
längs der gebrochenen Ebene II-II
in Fig. 1, in Pfeilrichtung
gesehen wiedergibt,

Fig. 3   einen schematischen Axial-Halbschnitt eines Kugelhahns zeigt,
in welchem eine bevorzugte
Ausführungsform der erfindungsgemäßen Isolierrohrverbindung mit
isolationsüberbrückender Funkenstrecke Anwendung findet, wobei

- 26 -

der mit III bezeichnete Pfeil
einen Schrägschnitt durch die
Wandung der Isolierrohrverbindung
anzeigt,

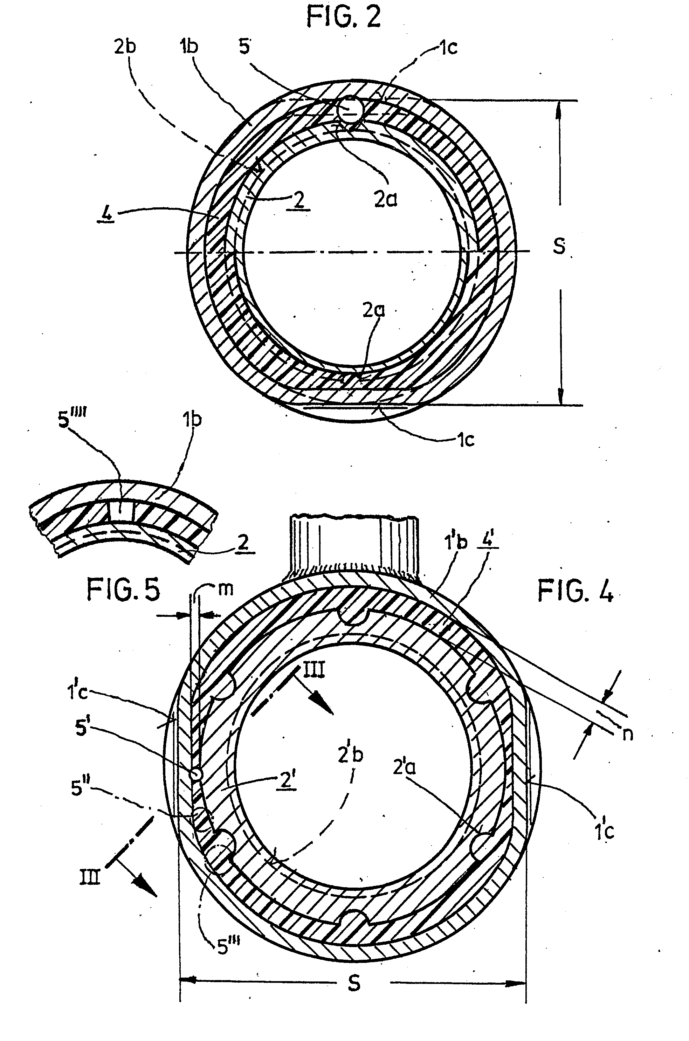

Fig. 4 einen schematischen Querschnitt
längs der Ebene IV-IV in Fig. 3,
in Pfeilrichtung gesehen darstellt, wobei die Ebene, längs
welcher der in Fig. 3 angedeutete Wandungs-Schrägschnitt
verläuft, mit III-III bezeichnet
ist, und

Fig. 5 einen schematischen Teil-Querschnitt zeigt, aus welchem eine
andere Ausführungsform des
die Funkenstrecke der erfindungsgemäßen Isolierrohrverbindung
darstellenden achsparallelen
Hohlraumes ersichtlich ist.

Gleiche bzw. äquivalent wirkende Teile sind in
den Zeichnungen mit gleichen Bezugsziffern, gegebenenfalls unter Hinzufügung von Indizes bezeichnet.

Die in den Fig. 1 und 2 dargestellte Isolierrohrverbindung mit isolationsüberbrückender Funkenstrecke
besteht aus einem, aus spanlos verformbarem Metall
hergestellten übergreifenden Rohrteil 1, einem
metallenen übergriffenen Rohrteil 2, einem elastisch
verformt dichtend an der Innenumfangsfläche des übergreifenden Rohrteils 1 und der Außenumfangsfläche des
übergriffenen Rohrteils 2 anliegenden O-Dichtring 3,

einem den Ringraum zwischen dem übergreifenden Rohrteil 1 und dem übergriffenen Rohrteil 2 ausfüllenden Isolierring 4 aus elektrisch isolierendem, hartem Gießharz und einem in diesem Isolierring achsparallel angeordneten, eine Funkenstrecke zwischen dem übergreifenden Rohrteil und dem übergriffenen Rohrteil bildenden, nach außen allseits abgeschlossenen Hohlraum 5.

Das übergreifende Rohrteil 1 weist eine das eine Ende des übergriffenen Rohrteils 2 auf eine gewisse Länge übergreifende becherartige Erweiterung auf, die aus einem sich an den eigentlichen Rohrabschnitt des übergreifenden Rohrteils anschließenden kegeligen Erweiterungsabschnitt 1a und einer sich an diesen anschließenden zylindrischen Erweiterungswandung 1b besteht. Diese becherartige Erweiterung ist durch kalte spanlose Formung gebildet.

Das übergriffene Rohrteil 2 ist in seinem von der becherartigen Erweiterung 1b des übergreifenden Rohrteils 1 übergriffenen Abschnitt mit über seinen Außenumfang verteilten Längsnuten 2a und mit über deren Länge verteilten achssenkrechten Außenumfangsnuten 2b versehen. Nahe seines im Übergreifungsbereich gelegenen Stirnendes weist das übergriffene Rohrteil eine weitere achssenkrechte Außenumfangsnut 2c auf, in welche der O-Dichtring 3 eingelegt ist. Die genannten Nuten können, wenn das übergriffene Rohrteil 2 ein Gußteil ist, mit Ausnahme der Umfangsnut 2 eingeformt sein, sind im übrigen jedoch und insbesondere wenn das übergriffene Rohrteil ein nahtlos gezogenes oder stranggepreßtes Metallrohr ist, durch Drehen bzw. Fräsen oder Schleifen hergestellt. Da das übergreifende

Rohrteil aus kalt spanlos verformbarem Metall besteht, also entweder ein nahtlos gezogenes oder im Strangpreßverfahren hergestelltes Metallrohr ist, kann davon ausgegangen werden, daß seine Innenfläche auch in dem becherartig erweiterten Teil 1b so glatt ist, daß in montiertem Zustand der Isolierrohrverbindung der O-Dichtring 3, dessen Ringstärke in unverformtem Zustand größer als das Radialmaß zwischen der Innenumfangsfläche der becherartigen Erweiterung 1b und dem Grund der ihn aufnehmenden Umfangsnut 2c des übergriffenen Rohrteils 2 ist, in zusammengebautem Zustand der Isolierrohrverbindung unter elastischer Verformung dichtend an den ihn berührenden Umfangsflächen beider Rohrteile 1 und 2 anliegt.

Beim Zusammenbau der Anordnung wird der O-Dicht- ring 3 in die ihn aufnehmende Umfangsnut 2c des übergriffenen Rohrteils 2 eingelegt und dieses zusammen mit dem Dichtring in die becherartige Erweiterung 1b des übergreifenden Rohrteils 1 eingeschoben. Sodann wird ein, zwei radial außen diametral gegenüberliegend angeordnete, parallele Abflachungen aufweisendes, im übrigen querschnittsmäßig dem Ringraumquerschnitt zwischen der becherartigen Erweiterung 1b des übergreifenden Rohrteils 1 und dem übergriffenen Bereich des übergriffenen Rohrteils 2 angepaßtes Widerlager- Ringmuffenwerkzeug üblicher Bauart in den Ringraum eingeschoben und die ganze Anordnung in eine Doppelbackenpresse ebenfalls üblicher Bauart mit diametral einander gegenüberliegend angeordneten Preßbacken derart eingebracht, daß die diametralen Abflachungen des Widerlager-Ringmuffenwerkzeugs den ebenen, diametralen Backenflächen der Presse gegenüberstehen und die umfangsmäßig zwischen diesen Backen gelegenen Außenumfangsflächen der becherartigen Erweiterung 1b des übergreifenden Rohrteils 1 satt an entsprechenden Widerlagerflächen der Presse anliegen. Durch radiales Nachinnenbewegen der Preßbacken der Doppelbackenpresse werden sodann die den Pressenbackenflächen zugewandten Umfangsbereiche der becherartigen Erweiterung 1b des übergreifenden Rohrteils bis zur zumindestens teilweisen Anlage an den Abflachungen des Widerlager-Ringmuffenwerkzeugs derart verformt, daß zwei diametrale, zueinander parallele und achsparallele, radial weiter innen als der übrige Umfangsbereich der becherartigen Erweiterung des übergreifenden Rohrteils 1 gelegene, mit ihren Außenflächen Ansatzstellen für einen Maulschlüssel bildende Wandungsbereiche 1c der becherartigen Erweiterung entstehen. Der, der Schlüsselweite entsprechende gegenseitige Abstand der beiden ab-geflachten, zueinander parallelen Außenwandungs-flächen ist in Fig. 2 mit S bezeichnet. Nach Herausziehen des Widerlager-Ringmuffenwerkzeugs aus dem Ringraum wird, sofern nicht bereits geschehen, die Anordnung in vertikale Lage gebracht, so daß die stirnseitige Ringraummündung nach oben weist, wobei dafür gesorgt wird, daß beide Rohrteile 1 und 2 genau zu einander koaxial verlaufen. Nunmehr wird nach Aufsetzen einer üblichen Eingießvorrichtung auf die Ringraummündung ein Gemisch aus einem elektrisch isolierenden Gießharz und einem elektrisch isolierenden Härter in den Ringraum eingebracht, so daß es diesen vom O-Dichtring 3 bis zur oberen stirnseitigen Ringraummündung satt ausfüllt. Die Gießvorrichtung kann einen sich an die Ringraummündung anschließenden ringförmigen Formansatz aufweisen, der es ermöglicht, den Füllungspegel etwas nach oben über die Ringraummündung hinaus anzuheben.

Nach Erhärten der Gießharzfüllung wird unter Verwendung der gleichen, entsprechend ausgestalteten Vorrichtung oder unter Verwendung einer gesonderten, sich an der nunmehr fertig montierten Anordnung ausrichtenden gesonderten Bohrlehre eine achsparallele Bohrung von der Stirnseite der becherartigen Erweiterung 1b des übergreifenden Rohrteils her ein Stück weit in den Isolierring 4 vorgetrieben, deren Durchmesser etwas größer ist als der Radialabstand zwischen der Außenumfangsfläche des übergriffenen Rohrteils 2 und der Innenumfangsfläche der becherartigen Erweiterung 1b des übergreifenden Rohrteils 1. Die Achse dieser achsparallelen Bohrung wird so gesetzt, daß der Bohrer Material sowohl von der Außenumfangsfläche des übergriffenen Rohrteils als auch von der Innenumfangsfläche der becherartigen Erweiterung wegnimmt, so daß zwei einander radial gegenüberliegende materialblanke Längsstreifen dieser beiden Umfangsflächen entstehen. Im Anschluß daran wird die Bohrung durch einen Stopfen 6 aus durchsichtigem bzw. durchscheinendem elastischem Polyvinylchlorid abgeschlossen, der vorzugsweise von einem PVC-Schweißdraht passenden Durchmessers abgeschnitten wurde. Der Durchmesser des Abschlußstopfens 6 ist so gewählt, daß der Stopfen die Bohrung absolut dichtend und fest haftend verschließt. Die Stopfenlänge ist so gewählt, daß der Stopfen bündig mit der Stirnfläche des Isolierringes abschließt und in der Bohrung einen genügend großen Hohlraum 5 freiläßt, der die Funkenstrecke der nunmehr fertigen Isolierrohrverbindung bildet.

Bei Herstellung einer etwas einfacheren Ausführungsform einer Isolierrohrverbindung nach der Erfindung kann, falls auf das Vorhandensein einer Maulschlüssel-Ansatzstelle verzichtet wird oder aber das übergreifende Rohrteil 1 ein Gußteil ist, an welchem eine oder mehrere Schlüsselansatzstellen bereits von der Gießform her gebildet sind, auf den soeben beschriebenen, die Verwendung eines Widerlager-Ringmuffenwerkzeugs und einer Doppelbackenpresse erfordernden Verformungsvorgang verzichtet werden, wodurch sich das Herstellungsverfahren gegenüber dem soeben oben dargelegten Verfahren noch weiter wesentlich vereinfacht.

Der axiale Überstand des Isolierringes 4 über die Stirnkante der becherartigen Erweiterung 1b des übergreifenden Rohrteils 1 hinaus ist stets dann erforderlich, wenn die Radialabmessung der Funkenstrecke 5, d.h. der Durchmesser der zur Bildung dieser Funkenstrecke vorzutreibenden Bohrung größer ist als das Radialmaß des Ringraumes zwischen der Innenumfangsfläche der becherartigen Erweiterung 1b des übergreifenden Rohrteils 1 und der Außenumfangsfläche des übergriffenen Rohrteils, d.h. dann, wenn die erfindungsgemäße Isolierrohrverbindung der soeben kurz dargelegten vereinfachten Ausführungsform entspricht.

Die zuerst beschriebene Ausführungsform einer Isolierrohrverbindung, bei welcher das übergreifende Rohrteil 1 aus spanlos verformbarem Metall besteht, hat gegenüber der vereinfachten Ausführungsform den Vorteil, daß durch die spanlose Verformung zweier diametral einander gegenüberliegender Umfangsbereiche der becherartigen Erweiterung 1b des übergreifenden Rohrteils 1 zwecks Bildung äußerer paralleler Schlüsselansatzflächen 1c querschnittsmäßig in diesem verformten Bereich vier Zwickelzonen gebildet werden, deren Radialmaß zwischen der Innenumfangsfläche der becherartigen Erweiterung 1b des übergreifenden Rohrteils 1 und der Außenumfangsfläche des übergriffenen Rohrteils 2 von einem Normalwert n (Fig. 4) auf einen Mindestwert m übergeht, wodurch es möglich ist, durch wahlweise Anbringung der achsparallelen Bohrung in diesem Zwickelbereich und entsprechende Wahl des Bohrerdurchmessers die Weite der anzubringenden Funkenstrecke beliebig zu variieren. Ist die Funkenstreckenweite kleiner als das radiale Normalmaß n des Ringraumes, so braucht der Isolierring 4 stirnseitig nicht über die Stirnkante der becherartigen Erweiterung 1b überzustehen, da dann keine Gefahr besteht, daß bei Auftreten von Überspannungen ein Funke an dieser Stelle zwischen den beiden einander übergreifenden Rohrteilen 1 und 2 übertritt.

In den Fig. 3 und 4 ist die Anwendung der Erfindung als Trennstelle für einen Kugelhahn dargestellt. Das übergreifende Rohrteil 1' und insbesondere dessen becherartige Erweiterung 1'b ist in diesem Fall ein Teil des Kugelhahngehäuses, während in diesem speziellen Fall das übergriffene Rohrteil 2' eine genormte Innengewindemuffe ist, deren Außenumfangsfläche durch spanabhebende Bearbeitung mit am Umfang verteilten Längsnuten 2'a und nicht bezeichneten, auf deren Länge verteilten achssenkrechten Umfangsnuten versehen und deren eine Stirnfläche bei 2'b kegelig abgesenkt ist. Das übergriffene Rohrteil 2' weist in der Nähe seiner stirnseitigen kegeligen Absenkung 2'b eine weitere achssenkrechte Außenumfangsnut 2'c auf, in die ein O-Dichtring 3' aus elektrisch isolierendem, elastisch verformbarem Material eingelegt ist. Dieser O-Dichtring 3' weist einen rundumlaufenden, lippenförmigen Ansatz auf, der im Querschnitt U-förmig ausgebildet ist, wobei der eine U-Schenkel am eigentlichen O-Ring 3' ansetzt, ferner der U-Steg die kegelige stirnseitige Absenkung 2'b des übergriffenen Rohrteils 2' umgreift und bei 3'a wulstartig verdickt ist, während der andere U-Schenkel 3'b an der Innengewindefläche des übergriffenen Rohrteils 2' anliegend ein Stück in das Innere dieses Rohrteils hineinragt. Der den Ringraum zwischen der becherartigen Erweiterung 1'b des übergreifenden Rohrteils 1' und dem übergriffenen Rohrteil 2' ausfüllende Isolierring 4' besteht wiederum aus einem harten Gießharz. Die Funkenstrecke 5' ist in der oben bereits dargelegten Art durch eine achsparallele Bohrung innerhalb des Isolierringes 4' gebildet, die wiederum durch einen aus durchsichtigem bzw. durchscheinendem, elastischem Polyvinylchlorid bestehenden Abschlußstopfen 6' nach außen hin dichtend und fest abgeschlossen ist.

Wie aus Fig. 4 ersichtlich, ist die Funkenstrecke an der engsten Stelle eines Querschnittszwickels des Isolierringes 4' zwischen der Außenumfangsfläche des übergriffenen Rohteils 2' und der zwecks Bildung von parallelen Schlüsselangriffsflächen 1'c beidseits abgeflachten Innenumfangsflächenbereichen der becherartigen Erweiterung 1'b des übergreifenden Rohrteils 1' angeordnet, so daß die Funkenstreckenweite wesentlich kleiner ist als das normale radiale Abstandsmaß n zwischen diesen beiden Umfangsflächen. In Fig. 4 ist bei 5" und 5"' in strichpunktierten Linien angedeutet, daß die, die Funkenstrecke bildende achsparallele Bohrung selbstverständlich wahlweise auch an anderen Stellen des Zwickelbereiches angeordnet sein kann, wenn gewünscht wird, daß die Weite der Funkenstrecke größer ist.

Wie Fig. 3 zeigt, reichen bei der dort gezeigten Ausführungsform der Erfindung die durch radiale Verformung der becherartigen Erweiterung 1'b erzeugten Schlüsselangriffsflächen 1'c bis zum stirnseitigen Mündungsrand dieser becherartigen Erweiterung, was den fertigungsmäßigen Vorteil ergibt, daß zur Verformung keine Doppelbackenpresse erforderlich ist, sondern die Verformung mittels eines Ziehringes erfolgen kann.

Die Herstellung der in den Fig. 3 und 4 dargestellten Isolierrohrverbindung erfolgt in der oben bereits mit Bezug auf die Herstellung der in den Fig. 1 und 2 dargestellten Isolierrohrverbindung im einzelnen geschilderten Weise. Es muß jedoch dafür gesorgt werden, daß die wulstartige Verdickung 3'a des im Querschnitt U-förmigen O-Ring-Ansatzes mit geringem Axialdruck einerseits an dem Kugelküken 7 des Kugelhahns und andererseits an der kegelig abgesenkten Stirnfläche 2'b des übergriffenen Rohrteils 2' elastisch verformt und dichtend anliegt. Dies geschieht gemäß der Erfindung in der Weise, daß bei der Montage das übergriffene Rohrteil 2' so weit in die becherartige Erweiterung 1'b des übergreifenden Rohrteils 1' eingeschoben wird, daß der wulstartig verdickte U-Steg 3'a des O-Dichtringansatzes am Kugelküken 7 anliegt, daß anschließend das übergriffene Rohrteil 2' mit leichtem Axialdruck derart in Richtung des Kugelkükens gedrängt wird, daß der an ihm anliegende U-Steg des Ansatzes elastisch verformt wird und dichtend sowohl am Kugelküken 7 als auch an der kegelig abgesenkten Stirnfläche 2'b des übergriffenen Rohrteils 2' anliegt, wonach der Axialdruck während und nach dem Einbringen des Gießharz-Härtergemisches in den Ringraum so lange aufrechterhalten wird, bis die Gießharzfüllung erhärtet ist und dadurch den Isolierring 4' bildet, der beide Rohrteile 1' und 2' unverrückbar und untrennbar miteinander verbindet. Dies kann mittels einer für einen ähnlichen Zweck bereits üblichen Vorrichtung geschehen.

Der die Funkenstrecke 5 bildende, achsparallel verlaufende Hohlraum innerhalb des Isolierringes 4 kann auch auf andere Weise als durch Einbringen einer achsparallelen Bohrung gebildet werden. In Abwandlung des erfindungsgemäßen Verfahrens kann dies durch achsparalleles Einbringen eines stabartigen und formmäßig dem Querschnitt des herzustellenden Hohlraums und dem betreffenden Ringraumbereich angepaßten, sich elastisch an die freizuhaltenden Bereiche der den Ringraum begrenzenden Oberflächen der beiden Rohrteile anschmiegenden Kernes in den Ringraumbereich vor dem Einbringen des Gießharz-Härtergemisches und Wiederentfernen dieses Kernes nach zumindestens teilweisem Erhärten der Füllung geschehen. Die Ringraummündung wird in diesem Fall nach Entfernen des Kernes wiederum mit einem Stopfen aus elastischem, durchsichtigem oder durchscheinendem Polyvinilchlorid dichtend verschlossen, dessen Querschnitt affin zu dem Kernquerschnitt ist. Eine auf diese Weise hergestellte Funkenstrecke 5"" ist in Fig. 5 dargestellt, wobei in diesem Falle der Kernquerschnitt einem Kreisringsektor-Viereck entspricht. Der Kern muß so beschaffen sein, daß er sich nach Erhärten des den Isolierring 4 bildenden Gießharzes ohne Schwierigkeit wieder entfernen läßt. Außerdem muß der Kern sicherstellen, daß die beiden den durch ihn definierten achsparallelen Hohlraum begrenzenden Längsstreifen der Innenumfangsfläche der übergreifenden becherartigen Erweiterung 1b und der
Außenumfangsfläche des übergriffenen Rohrteils 2
blank bleiben.

Bei allen angegebenen Beispielen braucht das
übergreifende Rohrteil 1 bzw. 1' nicht unbedingt eine
becherartige Erweiterung 1b bzw. 1'b aufzuweisen.
Vielmehr kann, wenn ein Querschnittsübergang der
lichten Weite hinsichtlich der isolierend miteinander
zu verbindenden Rohrteile 1 und 2 keine Rolle spielt,
das übergreifende Rohrteil eine größere lichte Weite
haben als das übergriffene Rohrteil, ohne daß sich
im übrigen an der Ausbildung der mit einer isolationsüberbrückenden Funkenstrecke versehenen Isolierrohrverbindung und an deren Herstellungsart sonst irgend
etwas ändert.

PATENTANWÄLTE
DIPL. ING. R. HOLZER
DIPL. ING. (FH) W. GALLO
PHILIPPINE-WELSER-STRASSE 14
ZUGELASSENE VERTRETER VOR DEM
EUROPÄISCHEN PATENTAMT
PROFESSIONAL REPRESENTATIVES
BEFORE THE EUROPEAN PATENT OFFICE
MANDATAIRES AGRÉÉS PRÈS L'OFFICE
EUROPÉEN DES BREVETS
8900 AUGSBURG
TELEFON 0821/516475
TELEX 532202 PATOL D

- 37 -

Augsburg, den 14. September 1983

Anmelder: Georg Walz, Heiden-
heim/Brenz, Bundesrepublik Deutschland

Anw.Az. : W.1150 Europa

Patentansprüche

1. Unlösbare, abdichtende Isolierrohrverbindung mit isolationsüberbrückender Funkenstrecke (5; 5'; 5"; 5"'; 5""), bestehend aus zwei metallenen, sich mit Ringzwischenraum übergreifenden Rohrteilen (1, 2; 1'; 2'), einem in dem Ringraum angeordneten Dichtring (3; 3') aus elektrisch isolierendem, elastisch verformbarem Material und einem ebenfalls in dem Ringraum angeordneten Isolierring (4; 4') aus hartem Kunststoff, welch letzterer von einem, einander gegenüberliegende Oberflächenbereiche der beiden Rohrteile (1, 2; 1'; 2') freilassenden und so die Funkenstrecke bildenden Hohlraum (5; 5'; 5"; 5"'; 5"") durchsetzt ist, gekennzeichnet durch die Kombination folgender, teils bekannter, teils neuer Merkmale:

a) am Außenumfang des dem Ringraumgrund benachbarten Endes des übergriffenen Rohrteils (2; 2') ist eine Ringnut (2c; 2') gebildet,

b) der Dichtring (3; 3') ist ein in diese Ringnut (2c; 2'c) eingelegter O-Ring von in unverformtem Zustand größerer Ringstärke als der radialen Weite des Ringraumes plus Nuttiefe, der elastisch verformt mit seinem Außenumfang an der glatten Innenfläche des übergreifenden Rohrteils (1; 1') anliegt,

c) der Isolierring (4; 4') besteht aus einem den Ringraum über seine ganze axiale Länge zwischen dem O-Ring (3; 3') und seiner stirnseitigen Mündung satt ausfüllenden, erhärteten Gießharz, und

d) der die Funkenstrecke bildende Hohlraum (5; 5'; 5"; 5"'; 5"") erstreckt sich axial außerhalb des Bereiches des Dichtringes (3; 3') derart achsparallel in Längsrichtung des Isolierringes (4; 4'), daß ein Längsstreifen der Außenfläche des übergriffenen Rohrteils (2; 2') und ein diesem radial gegenüberliegender Längsstreifen der Innenfläche des übergreifenden Rohrteils (1; 1') freibleibt und daß der Hohlraum an beiden axialen Enden durch Isoliermasse abgeschlossen ist, wobei zumindestens die ihn zur stirnseitigen Ringraummündung hin abschließende Isoliermasse durchsichtig oder durchscheinend ist.

2. Isolierrohrverbindung nach Anspruch 1, dadurch gekennzeichnet, daß der O-Ring (3; 3') aus weichem Naturkautschuk, weichem Butadien-Acrylnitril-Polymerisat oder weichem Silikonkautschuk besteht.

3. Isolierrohrverbindung nach Anspruch 1 oder 2, dadurch gekennzeichnet, daß der Isolierring (4; 4') aus einem Phenol-, Epoxid- oder Polyesterharz, vorzugsweise einem unmodifizierten Epoxidharz auf der Basis von Disphenol A besteht, dem als Härter ein solcher auf Polyaminoimidazolinbasis beigemischt ist.

4. Isolierrohrverbindung nach einem der Ansprüche 1 bis 3, dadurch gekennzeichnet, daß die Radialabmessung des die Funkenstrecke bildenden Hohlraumes (5; 5"'; 5"") gleich oder etwas größer als die Radialabmessung des zwischen den beiden sich übergreifenden Rohrteilen (1, 2; 1'; 2') befindlichen Ringraumes (n) ist, und daß der Isolierring (4) an der stirnseitigen Ringraummündung axial über das Stirnende des übergreifenden Rohrteils (1) übersteht (Fig. 1, 2 und 5).

5. Isolierrohrverbindung nach einem der Ansprüche 1 bis 4, dadurch gekennzeichnet, daß der achssenkrechte Querschnitt des die Funkenstrecke (5; 5'; 5"; 5"') bildenden Hohlraums kreisförmig ist (Fig. 1 bis 4).

6. Isolierrohrverbindung nach einem der Ansprüche 1 bis 4, dadurch gekennzeichnet, daß der achssenkrechte Querschnitt des die Funkenstrecke (5"") bildenden Hohlraums kreisringsektorförmig ist (Fig. 5).

7. Isolierrohrverbindung nach einem der Ansprüche 1 bis 6, dadurch gekennzeichnet, daß der Funkenstrecken-Hohlraum (5; 5'; 5"; 5"'; 5"") zur stirnseitigen Ringraummündung hin durch einen Abschlußstopfen (6; 6') aus durchsichtigem bzw. durchscheinendem, elastischem Polyvinylchlorid abgeschlossen ist.

8. Isolierrohrverbindung nach Anspruch 5 und 7, dadurch gekennzeichnet, daß der Abschlußstopfen (6; 6') aus einem Abschnitt eines PVC-Schweißdrahtes besteht (Fig. 1 und 3).

9. Isolierrohrverbindung nach einem der Ansprüche 1 bis 8, dadurch gekennzeichnet, daß das übergreifende Rohrteil (1; 1') in dem das übergriffene Rohrteil (2; 2') übergreifenden Bereich becherartig erweitert (1b; 1'b) ist.

10. Isolierrohrverbindung nach einem der Ansprüche 1 bis 9, dadurch gekennzeichnet, daß der das übergriffene Rohrteil (2; 2') übergreifende Bereich (1b; 1'b) des übergreifenden Rohrteils (1; 1') mit mindestens zwei ebenen, diametralen, zueinander parallelen und achsparallelen, radial weiter innen als der übrige Außenumfangsbereich des übergreifenden Rohrteilbereiches (1b; 1'b) gelegenen, Ansatzstellen (1c; 1'c) für einen Maulschlüssel bildenden Außenumfangsbereichen versehen ist und daß der die Funkenstrecke bildende Hohlraum (5'; 5") sich in einem der Zwickelbereiche zwischen der Innenfläche eines dieser beiden Wandungsbereiche und dem diesem gegenüberliegenden Außenflächenbereich des übergriffenen Rohrteils (2; 2') befindet, wobei die Radialabmessung (m) dieses Hohlraums kleiner ist als die radiale Weite (n) der außerhalb dieser Zwickelbereiche gelegenen Ringraumbereiche (Fig. 3 und 4).

11. Isolierrohrverbindung nach einem der Ansprüche 1 bis 10, dadurch gekennzeichnet, daß das übergreifende Rohrteil (1; 1') aus spanlos verformbarem Metall besteht.

- 41 -

12. Isolierrohrverbindung nach Anspruch 10 oder 11, dadurch gekennzeichnet, daß sich die die Ansatzstellen für einen Maulschlüssel bildenden Wandungsbereiche (1'c) des übergreifenden Rohrteils (1') axial bis an das im Bereich des übergriffenen Rohrteils (2') gelegene Stirnende des übergreifenden Rohrteils erstrecken (Fig. 3).

13. Isolierrohrverbindung nach einem der Ansprüche 1 bis 12, dadurch gekennzeichnet, daß das übergreifende Rohrteil (1') ein Teil eines Kugelhahngehäuses ist und daß der O-Dichtring (3') einen rundumlaufenden, lippenförmigen Ansatz hat, der im Querschnitt U-förmig ausgebildet ist, wobei der eine U-Schenkel am O-Ring ansetzt, ferner der U-Steg zwischen dem Kugelküken (7) und der kegelig eingesenkten kükenseitigen Stirnfläche (2'b) des übergriffenen Rohrteils (2') verläuft und mit geringem Druck an den ihm zugewandten Oberflächenbereichen dieser beiden Teile abdichtend anliegt, und wobei der andere U-Schenkel (3'b) an der Innenfläche des übergriffenen Rohrteils (2') anliegend ein Stück in das Innere dieses Rohrteils hineinragt (Fig. 3 und 4).

14. Isolierrohrverbindung nach Anspruch 13, dadurch gekennzeichnet, daß der U-Stegbereich (3'a) des O-Dichtringes (3') zum Kugelhahnküken (7) hin wulstartig verdickt ist (Fig. 3).

15. Verfahren zur Herstellung einer Isolierrohrverbindung nach einem der Ansprüche 1 bis 14, gekennzeichnet durch folgende Verfahrensschritte:

Wahlweise a) oder b): Versehen des Außenumfanges des dem Ringraumgrund zugeordneten Endes des übergriffenen Rohrteils (1; 1') mit einer Ringnut (2c; 2'c),

Wahlweise b) oder a): Gegebenenfalls Glätten des dem Ringraumgrund zugeordneten Bereiches der Innenfläche des übergreifenden Rohrteils (1; 1'),

c) Einlegen des O-Dichtungsringes (3; 3') in die Ringnut (2c; 2'c) des übergriffenen Rohrteils (2; 2'),

d) Einschieben des übergriffenen Rohrteils (2; 2') in das übergreifende Rohrteil (1; 1'),

e) Verbringen der Anordnung in vertikale, mit der Ringraummündung nach oben weisende Stellung und Überprüfen der Koaxialität der beiden Rohrteile (1, 2; 1', 2'),

f) Gegebenenfalls Aufsetzen eines ringförmigen Formaufsatzes auf die Mündungs-Stirnseite des übergreifenden Rohrteils (1; 1'),

g) Einbringen eines Gemisches aus einem elektrisch isolierenden Gießharz und einem elektrisch isolierenden Härter in den Ringraum zwischen dem übergreifenden Rohrteil (1; 1') und gegebenenfalls dem Formaufsatz einerseits und dem übergriffenen Rohrteil (2; 2') andererseits,

h) Erhärtenlassen der Füllung, danach gegebenenfalls Abnehmen des Formaufsatzes,

i) Bohren bzw. Fräsen einer achsparallelen
Bohrung in die erhärtete Füllung von der Mündungs-
Stirnseite her über einen Teil der axialen
Ringraumlänge mit etwas größerem Durchmesser als
der radialen Ringraumweite derart, daß von beiden
Rohrteilen (1, 2; 1', 2') Material abgetragen
wird, und

k) Dichtes Verschließen eines der Ringraummündung
zugeordneten Teils der Bohrung mit einem Abschlußstopfen (6; 6') aus durchsichtigem bzw. durchscheinendem, elastischem Isolierstoff, der
vorzugsweise von einem PVC-Schweißdraht abgeschnitten wurde.

16. Verfahren zur Herstellung einer Isolierrohrverbindung nach einem der Ansprüche 1 bis 8 und nach
den Ansprüchen 9, 10, 11 und 12 bzw. zur Herstellung
einer Isolierrohrverbindung nach einem der Ansprüche 13
bis 15 und nach den Ansprüche 9, 10, 11 und 12, gekennzeichnet durch folgende Verfahrensschritte:

Wahlweise a) oder b): Versehen des Außenumfanges
des dem Ringraumgrund zugeordneten Endes des
übergriffenen Rohrteils (1; 1') mit einer Ringnut (2c; 2'c),

aa) Einbringung eines nahtlos gezogenen bzw.
stranggepreßten Metallrohres, dessen Durchmesser
zwischen dem Durchmesser des eigentlichen Rohrabschnitts des übergreifenden Rohrteils (1; 1')
und demjenigen der becherartigen Erweiterung (1b;
1'b) desselben liegt, in eine vorteilhaft stufenweise arbeitende Verformungs- und Montagevorrichtung, in welcher das übergreifende Rohrteil durch axiale Relativbewegung zwischen Aufweit- oder Formgebungsdornen bzw. Ziehringen verformt und in welcher es mit dem übergriffenen Rohrteil (2; 2') vormontiert wird,

ab) Herstellen der becherartigen Erweiterung (1b; 1'b) des übergreifenden Rohrteils (1; 1') durch gegebenenfalls zweistufiges radiales Aufweiten eines etwa die halbe axiale Länge des Metallrohres einnehmenden Abschnittes des Metallrohres mittels Aufweitdorn auf den Fertigdurchmesser dieser becherartigen Erweiterung,

ac) Herstellen des eigentlichen Rohrabschnitts des übergreifenden Rohrteils (1; 1') durch gegebenenfalls zweistufiges radiales Einziehen des nicht erweiterten Abschnitts des Metallrohres mittels Ziehring auf den Fertigdurchmesser dieses Rohrabschnitts,

ad) Zurückziehen des Aufweitdornes aus der becherartigen Erweiterung (1b; 1'b) des übergreifenden Rohrteils (1; 1'),

Wahlweise b) oder c): Einlegen des O-Dichtungsringes (3; 3') in die Ringnut (2c; 2'c) des übergriffenen Rohrteils (2; 2'),

d) Einschieben des übergriffenen Rohrteils (2; 2') in das übergreifende Rohrteil (1; 1'),

0114022

- 45 -

da) Einführen eines, zwei ebene, radial außen diametral gegenüberliegend achsparallel angeordnete, parallele Abflachungen aufweisenden, im übrigen dem Qquerschnitt des Ringraumes zwischen der becherartigen Erweiterung (1b; 1'b) des übergreifenden Rohrteils (1; 1') und dem übergriffenen Rohrteil (2; 2') angepaßten Widerlager-Ringmuffenwerkzeugs in diesen Ringraum,

db) Einführen der so gebildeten Anordnung in einen Ziehring der Verformungs- und Vormontagevorrichtung, dessen lichte Weite gleich dem Außendurchmesser der becherartigen Erweiterung (1b; 1'b) des übergreifenden Rohrteils (1; 1') ist und der innen zwei diametrale, zueinander parallele, zu den Abflachungen des Widerlager-Ringmuffenwerkzeugs affine Abflachungen aufweist, deren gegenseitiger Abstand um die doppelte Wandstärke der becherartigen Erweiterung des übergreifenden Rohrteils größer ist als der gegenseitige Abstand der Widerlager-Ringmuffenwerkzeug-Abflachungen, derart, daß die Abflachungen dieses Werkzeugs und diejenigen des Ziehrings einander gegenüberliegen, und dadurch Erzeugen der bis zum Mündungsrand der becherartigen Erweiterung (1b; 1'b) des übergreifenden Rohrteils (1; 1') reichenden Maulschlüsselansatzstellen (1'c) an dieser Erweiterung,

dc) Herausnehmen der Anordnung aus der Verformungs- und Vormontagevorrichtung und Herausziehen des Widerlager-Ringmuffenwerkzeugs aus dem Ringraum zwischen der becherartigen Erweiterung (1b; 1'b) des übergreifenden Rohrteils (1; 1') und dem übergriffenen Rohrteil (2; 2'),

e) Verbringen der Anordnung in vertikale, mit der Ringraummündung nach oben weisende Stellung und überprüfen der Koaxialität der beiden Rohrteile (1, 2; 1', 2'),

f') Einbringen eines Gemisches aus einem elektrisch isolierenden Gießharz und einem elektrisch isolierenden Härter in den Ringraum,

g') Erhärtenlassen der Füllung,

h') Haltern der Anordnung derart, daß ein achsparalleles Bohren bzw. Fräsen von der stirnseitigen Ringraummündung her in den nunmehr von der erhärteten, den Isolierring (4; 4') bildenden Gießmasse ausgefüllten Ringraum hinein in einem radial zwischen einem der beiden verformten Umfangsbereiche des übergreifenden Rohrteils (1; 1') und dem diesem gegenüberliegenden Umfangsbereich des übergriffenen Rohrteils (2; 2') gelegenen Ringraum-Zwickelbereich so erfolgt, daß von beiden Rohrteilen (1, 2; 1',2') Material abgetragen werden kann,

i) Bohren bzw. Fräsen einer achsparallelen Bohrung in die erhärtete Gießmasse von der Mündungs-Stirnseite her über einen Teil der axialen Ringraumlänge mit etwas größerem Durchmesser als dem Abstandsmaß (m) zwischen dem betreffenden verformten Umfangsbereich des übergreifenden Rohrteils (1; 1') und dem diesem gegenüberliegenden Umfangsbereich des übergriffenen Rohrteils (2; 2') entspricht, und

k) Dichtes Verschließen eines der Ringraummündung zugeordneten Teils der Bohrung (5, 5', 5") mit einem Abschlußstopfen (6; 6') aus durchsichtigem bzw. durchscheinendem, elastischem Isolierstoff, der von einem PVC-Schweißdraht abgeschnitten wurde.

17. Verfahren nach Anspruch 16, dadurch gekennzeichnet, daß die für die Verfahrensschritte aa) bis ad) und c) bis dc) verwendete Verformungs- und Vormontagevorrichtung anstatt eines Ziehringes eine Doppelbackenpresse mit radial verschiebbaren, diametral einander gegenüberliegend angeordneten, ebenen, zueinander parallelen und achsparallelen Preßbacken aufweist, die den Abflachungen des Widerlager-Ringmuffenwerkzeugs gegenüberstehen, und daß die Vorrichtung außerdem umfangsmäßig zwischen diesen Preßbacken gelegene, feststehende, hohlzylindersegmentförmige Widerlagerflächen aufweist, deren Durchmesser im wesentlichen gleich dem Außendurchmesser der becherartigen Erweiterung (1b) des übergreifenden Rohrteils (1) ist, und daß im Verfahrensschritt db) die Maulschlüsselansatzstellen (1c) dieser becherartigen Erweiterung durch radiales Nachinnenbewegen der Preßbacken der Backenpresse erzeugt werden, wobei sich die Außenumfänge der nicht verformten Bereiche der becherartigen Erweiterung an diese hohlzylindersegmentförmigen Widerlagerflächen und die Innenumfänge der verformten Bereiche an die Abflachungen des Widerlager-Ringmuffenwerkzeugs anlegen, worauf die Preßbacken anschließend vor dem Herausziehen des Widerlager-Ringmuffenwerkzeugs wieder in ihre Ausgangslage zurückbewegt werden.

18. Verfahren nach einem der Ansprüche 15 bis 17 zur Herstellung von Isolierrohrverbindungen nach einem der Ansprüche 1 bis 4 und Anspruch 6, dadurch gekennzeichnet, daß der achsparallele Hohlraum anstatt durch Bohren bzw. Fräsen durch achsparalleles Einbringen eines stabartigen und formmäßig dem Querschnitt des herzustellenden Hohlraumes (5"") und dem betreffenden Ringraumbereich angepaßten, sich elastisch an die freizuhaltenden Bereiche der den Ringraum begrenzenden Oberflächen der beiden Rohrteile (1, 2; 1'; 2') anschmiegenden Kernes in den Ringraumbereich vor dem Einbringen des Gießharz-Härtergemisches und Wiederentfernen des Kernes nach zumindestens teilweisem Erhärten der Füllung hergestellt wird und die Ringraummündung nach Entfernung des Kernes mit einem Stopfen (6; 6') aus elastischem, durchsichtigem oder durchscheinendem Polyvinilchlorid dichtend verschlossen wird, dessen Querschnitt affin zu dem Kernquerschnitt ist.

19. Verfahren nach einem der Ansprüche 15 bis 18 zur Herstellung von Isolierrohrverbindungen nach Anspruch 13, dadurch gekennzeichnet, daß in den Verfahrensschritten d) und e) das übergriffene Rohrteil (2') so weit in das übergreifende Rohrteil (1') eingeschoben wird, daß der U-Steg (3'a) des O-Dichtringansatzes am Kugelküken (7) anliegt, daß anschließend das übergriffene Rohrteil (2') mit leichtem Axialdruck derart in Richtung des Kugelkükens (7) gedrängt wird, daß der an ihm anliegende U-Steg (3'a) der O-Ringlippe elastisch verformt wird und dichtend sowohl am Kugelküken (7) als auch an der kegelig abgesenkten Stirnfläche (2'b) des übergriffenen Rohrteils (2') anliegt,
wonach der Axialdruck während und nach dem Einbringen
des Gießharzes in den Ringraum so lange aufrechterhalten wird, bis die Gießharzfüllung erhärtet ist.

20. Verfahren nach einem der Ansprüche 15 bis 19,
dadurch gekennzeichnet, daß spätestens vor dem Verfahrensschritt d) mindestens eines (z.B. 2; 2')
der beiden Rohrteile im Übergreifungsbereich mit dem
jeweils anderen Rohrteil (z.B. 1; 1') zugewandten
Längs- (2a; 2'a) oder/und Quernuten (2b; 2c; 2'b; 2'c)
versehen wird.

0114022

FIG. 1

FIG. 3

2/3

0114022

FIG. 2

FIG. 5

FIG. 4

Europäisches
Patentamt

# EUROPÄISCHER RECHERCHENBERICHT

0114022
Nummer der Anmeldung

EP 83 71 0065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | DE-U-8 215 730 (GOK REGLER- UND ARMATUREN) * Anspruch 3; Figuren 1, 2 * | 1,2 | F 16 L 25/02 |
| A | DE-A-3 047 003 (RHEINISCHES METALLWERK) | | |
| A | DE-U-7 614 486 (KOCH UND MÜLLER GMBH) | | |
| D,A | DE-U-7 311 220 (SCHUCK) * Seite 1, Zeilen 24-26; Figuren 1, 2, Position 4 * | 1 | |
| D,A | CH-A- 422 445 (VON ROLL) * Seite 1, Zeilen 57-70 * | 1,3 | RECHERCHIERTE SACHGEBIETE (Int. Cl. 3) |
| D,A | DE-A-2 713 398 (PIPELINE SEAL AND INSULATOR) | | F 16 L 25/00 |

Der vorliegende Recherchenbericht wurde für alle Patentansprüche erstellt.

| Recherchenort BERLIN | Abschlußdatum der Recherche 18-11-1983 | Prüfer SCHLABBACH M |
|---|---|---|